(19) Europäisches Patentamt
European Patent Office
Office européen des brevets

(11) **EP 4 610 324 A1**

(12) **EUROPEAN PATENT APPLICATION**
published in accordance with Art. 153(4) EPC

(43) Date of publication:
**03.09.2025 Bulletin 2025/36**

(21) Application number: **23882591.3**

(22) Date of filing: **23.10.2023**

(51) International Patent Classification (IPC):
**C09K 5/04** (2006.01)

(52) Cooperative Patent Classification (CPC):
**C09K 5/04**

(86) International application number:
**PCT/JP2023/038219**

(87) International publication number:
**WO 2024/090386 (02.05.2024 Gazette 2024/18)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **27.10.2022 JP 2022172709**

(71) Applicant: **AGC INC.**
**Chiyoda-ku,**
**Tokyo 1008405 (JP)**

(72) Inventors:
• **HAYAMIZU, Hiroki**
**Tokyo 100-8405 (JP)**
• **FUKUSHIMA, Masato**
**Tokyo 100-8405 (JP)**

(74) Representative: **Müller-Boré & Partner**
**Patentanwälte PartG mbB**
**Friedenheimer Brücke 21**
**80639 München (DE)**

(54) **HEAT CYCLE WORKING MEDIUM, AND HEAT CYCLE SYSTEM COMPOSITION**

(57) Provided is a working medium for a heat cycle, including trifluoroethylene, 1,1-difluoroethane, and (E)-1,3,3,3-tetrafluoropropene.

FIG.1

**Description**

Technical Field

The present disclosure relates to a working medium for a heat cycle and a composition for a heat cycle system.

Background Art

For a halogenated hydrocarbon mentioned herein, the abbreviation for the compound is given in parentheses after the compound name, and the abbreviation may be used instead of the compound name if necessary.

Conventionally, chlorofluorocarbons (CFCs) such as chlorotrifluoromethane and dichlorodifluoromethane, and hydrochlorofluorocarbons (HCFCs) such as chlorodifluoromethane have been used as refrigerants for refrigerating machines, refrigerants for air conditioning equipment, working media for electric power generation systems (for waste heat recovery electric power generation or the like), working media for latent heat transport devices (such as heat pipes), working media for heat cycle systems such as secondary cooling media. However, CFCs and HCFCs are currently subject to regulations due to their potential impact on the stratospheric ozone layer.

For these reasons, hydrofluorocarbons (HFCs), such as difluoromethane (HFC-32), tetrafluoroethane, and pentafluoroethane (HFC-125), which have less impact on the ozone layer, have come to be used as a working medium for a heat cycle system instead of CFCs and HCFCs. For example, R410A (a pseudo-azeotropic mixed refrigerant of IVC-32 and HFC-125 in a mass ratio of 1:1) is a refrigerant that has been widely used conventionally. However, it has been pointed out that HFCs may be a cause of global warming.

R410A has been widely used in air conditioning equipment such as so-called commercial air conditioners and home air conditioners, due to its high refrigeration capacity. However, R410A has a high global warming potential (GWP) of 2,256. Therefore, there is a demand for the development of a working medium having a low GWP. In this regard, there is a demand for the development of a working medium that can directly replace R410A, allowing the continued use of existing equipment without modification.

Recently, expectations have been focused on hydrofluoroolefins (HFOs), i.e., HFCs having a carbon-carbon double bond, which are working media that have little impact on the ozone layer and global warming because HFOs contain a carbon-carbon double bond which is easily decomposed by OH radicals in the atmosphere. As used herein, unless otherwise specified, saturated HFCs are referred to as HFCs, and are used to distinguish them from HFOs.

Among HFOs, a widely used working medium is, for example, 2,3,3,3-tetrafluoropropene (HFO-1234yf). While HFO-1234yf has a low GWP, it is difficult to obtain high cycle performance. Therefore, there is a demand for the development of a working medium that has a low GWP among HFOs and is capable of improving cycle performance compared to HFO-1234yf.

As an example of a working medium using an HFO, Patent Literature 1 discloses a technology relating to a working medium using trifluoroethylene (HFO-1123) that has a low GWP and provides excellent cycle performance.

Citation List

Patent Literature

Patent Literature 1: WO2015/125880

SUMMARY OF INVENTION

Technical Problem

An aspect of the present disclosure is to provide a working medium for a heat cycle that has excellent cycle performance, a reduced impact on global warming, and a low heat of combustion, and a composition for a heat cycle system using the same.

Solution to Problem

The disclosure encompasses the following aspects.

<1> A working medium for a heat cycle, including trifluoroethylene, 1,1-difluoroethane, and (E)-1,3,3,3-tetrafluoropropene.
<2> The working medium for a heat cycle according to <1>, which satisfies the following Formulas (1) and (2) when a content rate of 1,1-difluoroethane with respect to a total content rate of trifluoroethylene, 1,1-difluoroethane, and (E)-1,3,3,3-tetrafluoropropene is Y% by mass, and a content rate of (E)-1,3,3,3-tetrafluoropropene with respect to the same is Z% by mass:

$$\text{Formula (1): } 2.0 \leq Y \leq 18.34;$$

and

$$\text{Formula (2): } Z \leq -0.01611 \times Y^2 - 0.36606 \times Y + 17.14.$$

<3> The working medium for a heat cycle according to <2>, wherein the working medium for a heat cycle has a heat of combustion of 12.000 MJ/kg or less.

<4> The working medium for a heat cycle according to <2> or <3>, wherein the working medium for a heat cycle has a global warming potential of 45 or less.

<5> The working medium for a heat cycle according to <1>, which satisfies the following Formulas (3) and (4) when a content rate of 1,1-difluoroethane with respect to a total content rate of trifluoroethylene, 1,1-difluoroethane, and (E)-1,3,3,3-tetrafluoropropene is Y% by mass, and a content rate of (E)-1,3,3,3-tetrafluoropropene with respect to the same is Z% by mass:

$$\text{Formula (3): } 2.0 \leq Y \leq 76.25;$$

and

$$\text{Formula (4): } Z \geq 0.00279 \times Y^2 - 1.25979 \times Y + 84.84.$$

<6> The working medium for a heat cycle according to <5>, wherein the working medium for a heat cycle has a heat of combustion of 15.300 MJ/kg or less.

<7> The working medium for a heat cycle according to <5> or <6>, wherein the working medium for a heat cycle has a global warming potential of 130 or less.

<8> A composition for a heat cycle system, including the working medium for a heat cycle according to any one of <1> to <7>.

Advantageous Effects of Invention

According to one aspect of the present disclosure, a working medium for a heat cycle that has excellent cycle performance, a reduced impact on global warming, and a low heat of combustion, and a composition for a heat cycle system using the same are provided.

BRIEF DESCRIPTION OF DRAWINGS

FIG. 1 is a schematic configuration diagram showing a refrigeration cycle system as an example of a heat cycle system according to an embodiment of the disclosure.

FIG. 2 is a cycle diagram showing the state change of the working medium for a heat cycle in the refrigeration cycle system of FIG. 1 on a pressure-enthalpy diagram.

DESCRIPTION OF EMBODIMENTS

Hereinafter, embodiments of the disclosure will be described in detail. However, the disclosure is not limited to the following embodiments. In the following embodiments, components (including element steps and the like) are not essential unless otherwise specified. The same applies to numerical values and their ranges, which do not limit the disclosure.

As used herein, the numerical ranges indicated using "to" include the numerical values before and after "to" as the minimum and maximum values, respectively

In this disclosure, each component may contain plural corresponding substances. When a composition contains plural substances corresponding to each component, the proportion of each component means the total proportion of the plurality of substances present in the composition, unless otherwise specified.

In this disclosure, when an embodiment is described with reference to the drawings, the configuration of the embodiment is not limited to the configuration shown in the drawings. Furthermore, the sizes of the members in each drawing are conceptual, and the relative relationships between the sizes of the members are not limited to these.

In this disclosure, a combination of two or more preferred aspects is a more preferred aspect.

In this disclosure, the GWP of the working medium is the 100-year value from the Sixth Assessment Report of the Intergovernmental Panel on Climate Change (IPCC). The GWP of a mixture is the weighted average of the compositional mass.

In this disclosure, the heat of combustion of the working medium is a theoretical value calculated under the following assumptions, which is obtained by converting the value of the heat of combustion obtained by completely combusting 1 mol of the working medium with oxygen stoichiometrically into the value of the heat of combustion per 1 kg of the working medium.

Compounds in the production and reaction systems are assumed to be gases.

The combustion products, which are the compounds in the production system, are HF (g), $CO_2$ (g), $COF_2$ (g) and $H_2O$ (g).

In the case of calculating the heat of combustion of the working medium, each compound contained in the working medium is decomposed into the atoms that constitute the compound, and a virtual substance containing each atom is set in consideration of the molar ratio in the working medium. The heat of combustion is calculated based on the combustion reaction formula of the virtual substance. In the following formula, $C_qH_rF_s$ represents the virtual substance.

For example, the combustion reaction formula is defined by the magnitude of the number of H atoms (r) and the number of F atoms (s) in the substance. In the case of the number of H atoms (r) $\geq$ the number of F atoms (s), the following combustion reaction formula is used.

$$C_qH_rF_s + \left(q + \frac{r-s}{4}\right)O_2 = sHF + qCO_2 + \frac{r-s}{2}H_2O \qquad (r \geq s)$$

Meanwhile, in the case of the number of H atoms (r) < the number of F atoms (s), the following combustion reaction formula is used.

$$C_qH_rF_s + \left(q - \frac{s-r}{4}\right)O_2 = rHF + \frac{s-r}{2}COF_2 + \left(q - \frac{s-r}{2}\right)CO_2 \qquad (r < s)$$

[Working Medium for Heat Cycle]

The working medium for a heat cycle in one embodiment of the disclosure includes trifluoroethylene (HFO-1123), 1,1-difluoroethane (HFC-152a), and (E)-1,3,3,3-tetrafluoropropene (HFO-1234ze(E)). Hereinafter, the working medium for a heat cycle is also simply referred to as the "working medium."

Since the working medium of this embodiment includes HFO-1123, HFC-152a, and HFO-1234ze(E), the working medium can have all of excellent cycle performance, low impact on global warming, and a low heat of combustion.

As described above, R410A and HFO-1234yf have been widely used as working media for heat cycles. However, although R410A has high cycle performance, it has a high GWP. Therefore, as an alternative to R410A, there is a demand for a working medium that has high cycle performance and a low GWP. Although HFO-1234yf has a low GWP, its cycle performance is low. Therefore, as an alternative, there is a demand for a working medium having a low GWP and high cycle performance.

The cycle performance is the performance required when a working medium is applied to a heat cycle system, and is evaluated by the coefficient of performance and capacity per unit volume. In a case in which the heat cycle system is a refrigeration cycle system, the capacity is a refrigeration capacity, which is the output in the refrigeration cycle system. The coefficient of performance is a value obtained by dividing an output (kW) by a power (kW) consumed to obtain the output (kW), and corresponds to the energy consumption efficiency. In other words, the coefficient of performance is the capacity per kW of power consumption. The higher the coefficient of performance, the greater the output that can be obtained with a smaller input. Hereinafter, the capacity per unit volume is also referred to as "CAP" and the coefficient of performance is also referred to as "COP."

HFO-1123 has a low GWP and a high CAP in terms of cycle performance, but there is room for improvement in COP.

One possible method of improving the COP while taking advantage of the low GWP and high CAP of HFO-1123 is to use a mixture of HFO-1123 and HFC-152a. HFC-152a is a compound that has a relatively low GWP and can achieve a high COP, and is therefore expected to improve the COP. However, HFC-152a has a higher combustibility than HFO-1123.

For a working medium containing a highly combustible compound, low combustibility is required from the viewpoint of safety not only in the initial component ratio, which is the ratio at the time of mixing, but also in the component ratio with leakage, which is the ratio after evaporation and leakage during transportation or the like.

Therefore, in a working medium which is a mixture of a highly combustible compound and a less combustible compound, when the most combustible compound in the mixture is Compound A, it is preferable that the working medium satisfies the following Condition 1 or 2.

Condition 1: Among the compounds contained in the mixture, Compound A has the lowest boiling point.

Condition 2: The mixture contains Compound B having a lower combustibility and a lower boiling point than Compound A, and Compound C having a lower combustibility and a higher boiling point than Compound A.

Since the working medium that satisfies Condition 1 or 2 above contains Compound C, which has a lower combustibility than Compound A and a higher boiling point than Compound A, even when evaporation or leakage occurs during transportation or the like, as the boiling points of Compounds A and B are lower than that of Compound C, Compound C is likely to be concentrated, while Compound A is unlikely to be concentrated. Therefore, it is only necessary to consider the combustibility in the initial component ratio, which makes it easy to select the component ratio in the working medium, which is a mixture.

In a working medium consisting of HFO-1123 and HFC-152a, the boiling point of HFC-152a, which has the highest combustibility, is -24°C, and the boiling point of HFO-1123, which has a lower combustibility than HFC-152a, is -61°C. Thus, Conditions 1 and 2 above are not satisfied.

Therefore, in this embodiment, HFO-1234ze(E), which has a boiling point of -19°C, is used as a compound that is less combustible and has a higher boiling point than HFC-152a. HFO-1234ze(E) is a compound that has a low GWP, an extremely low ozone depletion potential because it does not contain chlorine atoms, and also has a low heat of combustion. Therefore, the working medium of this embodiment can suppress the impact on the ozone layer, satisfy Condition 2 above, and suppress the heat of combustion while taking advantage of the low GWP and high CAP of HFO-1123 and the high COP of HFC-152a.

When the content rate of HFO-1123 with respect to the total of HFO-1123, HFC-152a, and HFO-1234ze(E) is represented by X% by mass, from the viewpoint of improving CAP, X is preferably 3.0 or more, more preferably 4.0 or more, and still more preferably 5.0 or more. From the viewpoint of improving the COP, X is preferably 93.0 or less, more preferably 90.0 or less, and still more preferably 85 or less.

When the content rate of HFC-152a with respect to the total of HFO-1123, HFC-152a, and HFO-1234ze(E) is represented by Y% by mass, from the viewpoint of improving COP, Y is preferably 2.0 or more, more preferably 3.0 or more, and still more preferably 4.0 or more From the viewpoint of reducing the heat of combustion, Y is preferably 80.0 or less, more preferably 75.0 or less, and still more preferably 70.0 or less.

When the content rate of HFO-1234ze(E) with respect to the total of HFO-1123, HFC-152a, and HFO-1234ze(E) is represented by Z% by mass, from the viewpoint of reducing the heat of combustion, Z is preferably 5.0 or more, more preferably 6.0 or more, and still more preferably 7.0 or more. From the viewpoint of improving the CAP, Z is preferably 90.0 or less, more preferably 85.0 or less, and still more preferably 80.0 or less.

<Optional Components>

The working medium of the disclosure may optionally include, in addition to HFO-1123, HFC-152a, and HFO-1234ze(E), compounds that are optional components usually used as working media, if necessary. Note that the total content rate of HFO-1123, HFC-152a, and HFO-1234ze(E) with respect to the entire working medium is preferably 80.0% by mass or more, more preferably 90.0% by mass or more, and still more preferably 95.0% by mass or more.

Examples of the above-described optional components include HFCs other than HFC-152a, HFOs other than HFO-1123 and HFO-1234ze(E), and other components that vaporize or liquefy together with HFO-1123.

Examples of HFCs as optional components include trifluoroethane, 1,1,2,2-tetrafluoroethane (HFC-134), pentafluoropropane, hexafluoropropane, heptafluoropropane, pentafluorobutane, and heptafluorocyclopentane. Examples of HFOs as optional components include 1,2-difluoroethylene (HFO-1132), 2-fluoropropene (HFO-1261yf), 1,1,2-trifluoropropene (HFO-1243yc), 1,2,3,3,3-pentafluoropropene (HFO-1225ye), and 3,3,3-trifluoropropene (HFO-1243zt).

In addition, examples of optional components other than HFCs and HFOs described above include: hydrocarbons such as propylene, cyclopropane, butane, isobutane, pentane, and isopentane; chlorofluoroolefins (CFOs) such as 1,1-dichloro-2,3,3,3-tetrafluoropropene (CFO-1214ya), 1,3-dichloro-1,2,3,3-tetrafluoropropene (CFO-1214yb), and 1,2-dichloro-1,2-difluoroethylene(CFO-1112); and hydrochlorofluoroolefins (HCFOs) such as 1-chloro-2,3,3,3-tetrafluoropropene (HCFO-1224yd) and 1-chloro-1,2-difluoroethylene(HCFO-1122). As the optional components, those having little impact on the ozone layer and little effect on global warming are preferred.

<Constituent Components and Properties of Working Medium>

The content rate of HFO-1123 with respect to the entire working medium is preferably 3.0 mass % or more, more preferably 4.0 mass % or more, and still more preferably 5.0 mass % or more, from the viewpoint of improving the CAP. In addition, the content rate of HFO-1123 with respect to the entire working medium is preferably 93.0 mass % or less, more preferably 90.0 mass % or less, and still more preferably 85.0 mass % or less, from the viewpoint of improving the COP

The content rate of HFC-152a with respect to the entire working medium is preferably 2.0% by mass or more, more preferably 3.0% by mass or more, and still more preferably 4.0% by mass or more, from the viewpoint of improving the COP. In addition, the content rate of HFC-152a with respect to the entire working medium is preferably 80.0 mass % or less, more preferably 75.0 mass % or less, and still more preferably 70.0 mass % or less, from the viewpoint of reducing the heat of combustion.

The content rate of HFO-1234ze(E) with respect to the entire working medium is preferably 5.0 mass % or more, more preferably 6.0 mass % or more, and still more preferably 7.0 mass % or more, from the viewpoint of reducing the heat of combustion. In addition, the content rate of HFO-1234ze(E) with respect to the entire working medium is preferably 90.0% by mass or less, more preferably 85.0% by mass or less, and still more preferably 80.0% by mass or less, from the viewpoint of improving the CAP.

From the viewpoint of reducing the impact of the working medium on global warming, the lower the GWP of the working medium, the more preferable it is. The GWP of the working medium is preferably 150 or less, more preferably 130 or less, still more preferably 100 or less, and particularly preferably 45 or less.

The smaller the heat of combustion of the working medium, the more preferable it is. The heat of combustion (HOC) of the working medium is preferably 15.300 MJ/kg or less, more preferably 15.000 MJ/kg or less, still more preferably 14.500 MJ/kg or less, and particularly preferably 14.000 MJ/kg or less.

<Temperature Gradient (TG)>

The working medium of the disclosure is a mixture of compounds having widely different boiling points and therefore has a temperature gradient.

Here, the temperature gradient is an index value for measuring the suitability of the mixture for use as a working medium. This value is defined as the property of the difference between the start and end temperatures of a heat exchanger, e.g., evaporation in an evaporator or condensation in a condenser, and is also referred to as "temperature glide." In an azeotropic mixture, the temperature gradient is zero, and in a pseudo-azeotropic mixture such as R410A, the temperature gradient is very close to zero.

A large temperature gradient in the working medium may increase the possibility of frost formation, for example, by reducing the inlet temperature at the evaporator. In a heat cycle system, in order to improve the heat exchange efficiency, it is common to make the working medium flowing through the heat exchanger and a heat source fluid such as water or air opposed to each other. Under stable operating conditions, the temperature difference in the heat source fluid remains small. Therefore, when the temperature gradient of the working medium is large, it is difficult to obtain a heat cycle system with excellent energy efficiency. For this reason, a working medium having a small temperature gradient is desired.

The temperature gradient (TG) of the working medium in the evaporator is preferably 7.0°C or less, more preferably 6.5°C or less, and still more preferably 6.0°C or less. The temperature gradient of the evaporator is a value calculated as the difference between the evaporation start temperature and the evaporation end temperature in the evaporator. This value is measured using a standard refrigeration cycle that employs the following temperature conditions in a refrigeration cycle system described below.

(Temperature Conditions of Standard Refrigeration Cycle)

Evaporating temperature: 5°C (average temperature between evaporation start temperature and evaporation end temperature)
Condensing temperature: 40°C (average temperature between condensation start temperature and condensation end temperature)
Degree of supercooling (SC): 5°C
Degree of superheat (SH): 5°C
Compressor efficiency: 0.7

The temperature gradient in the working medium in the evaporator varies depending on the mixture ratio of HFO-1123, HFC-152a, and HFO-1234ze(E). Regarding the relationship between the above-described mixing ratio and the temperature gradient of the evaporator, it has been confirmed that the temperature gradient of the evaporator in the working medium of the following formulation A and the working medium of the following formulation B is 7.0 or less.

Hereinafter, the content rate of HFO-1123, HFC-152a, and HFO-1234ze(E) with respect to the total of HFO-1123, HFC-152a, and HFO-1234ze(E) is expressed as X% by mass, Y% by mass, and Z% by mass, respectively.

<Working Medium of Formulation A>

The working medium of formulation A satisfies the following Formulas (1) and (2).

$$\text{Formula (1): } 2.0 \leq Y \leq 18.34$$

$$\text{Formula (2): } Z \leq -0.01611 \times Y^2 - 0.36606 \times Y + 17.14$$

The working medium of formulation A has high cycle performance, while having a lower GWP than R410A, which has a GWP of 2256, and also has a lower heat of combustion. Therefore, it is a suitable alternative composition to R410A.

The GWP of the working medium of formulation A is preferably 45 or less, more preferably 30 or less, and still more preferably 20 or less.

The heat of combustion (HOC) of the working medium of formulation A is preferably 12,000 MJ/kg or less, more preferably 11,500 MJ/kg or less, and still more preferably 11,000 MJ/kg or less.

From the viewpoint of improving the CAP, X in the working medium of formulation A is preferably 76.7 or more, more preferably 77.0 or more, still more preferably 78.0 or more, and particularly preferably 80.0 or more. In addition, from the viewpoint of improving the COP, X in the working medium having formulation A is preferably 93.0 or less, more preferably 90.0 or less, and still more preferably 85.0 or less.

In the working medium having formulation A, Y is 2.0 or more, and from the viewpoint of improving the COP, it is preferably 3.0 or more, and more preferably 4.0 or more. In the working medium having formulation A, Y is 18.34 or less, and from the viewpoint of reducing the heat of combustion, it is preferably 17.0 or less, and more preferably 16.0 or less.

In the working medium having formulation A, Z is preferably 5.0 or more, more preferably 6.0 or more, and still more preferably 7.0 or more, from the viewpoint of reducing the heat of combustion. In the working medium having formulation A, Z is preferably 16.34 or less, more preferably 16.0 or less, and still more preferably 15.0 or less, from the viewpoint of reducing the temperature gradient.

The relative refrigeration capacity $RCAP_{R410A}$ of the working medium of formulation A relative to R410A is preferably 0.93 or more, more preferably 0.94 or more, and still more preferably 0.95 or more. The relative refrigeration capacity $RCAP_{R410A}$ is a value expressed as $CAP_A/CAP_{R410A}$, where $CAP_{R410A}$ is the refrigeration capacity of R410A, and $CAP_A$ is the refrigeration capacity of the working medium of formulation A.

The refrigeration capacity CAP is the refrigeration capacity per unit volume of the evaporator, and is calculated as the product of the compressor intake saturated gas density and the latent heat of evaporation. Specifically, the refrigeration capacity CAP is a value determined by the method described later using the above-described reference refrigeration cycle. The product of CAP, which is the refrigeration capacity per unit volume, and the volumetric flow rate corresponds to the output Q (kW) in the cycle system. The above-described relative refrigeration capacity $RCAP_{R410A}$ indicates the refrigeration capacity of formulation A relative to R410A.

The relative coefficient of performance $RCOP_{R410A}$ of the working medium of formulation A relative to R410A is preferably 0.96 or more, more preferably 0.97 or more, and still more preferably 0.98 or more. The relative coefficient of performance $RCOP_{R410A}$ is a value expressed as $COP_A/COP_{R410A}$, where $COP_{R410A}$ is the coefficient of performance of R410A, and $COP_A$ is the coefficient of performance of the working medium of formulation A.

The coefficient of performance COP is a value obtained by dividing an output Q (kW) by a power P (kW) consumed to obtain the output Q (kW), and corresponds to the energy consumption efficiency. The higher the COP value, the greater the output that can be obtained with a smaller input. Specifically, the coefficient of performance COP is a value obtained by using the aforementioned standard refrigeration cycle and a formula that takes into account compressor efficiency, among the methods described later. The above-described relative coefficient of performance $RCOP_{R410A}$ indicates the coefficient of performance of formulation A relative to R410A.

<Working Medium of Formulation B>

The working medium of formulation B satisfies the following Formulas (3) and (4).

$$\text{Formula (3): } 2.0 \leq Y \leq 76.25$$

$$\text{Formula (4): } Z \geq 0.00279 \times Y^2 - 1.25979 \times Y + 84.84$$

The working medium of formulation B has higher cycle performance, lower GWP, and a lower heat of combustion than HFO-1234yf. Therefore, it is a suitable alternative composition to HFO-1234yf.

The GWP of the working medium having formulation B is preferably 150 or less, more preferably 130 or less, and still more preferably 100 or less.

The heat of combustion (HOC) of the working medium of formulation B is preferably 15.300 MJ/kg or less, more preferably 15.000 MJ/kg or less, and still more preferably 14.500 MJ/kg or less.

From the viewpoint of improving the CAP, X in the working medium having formulation B is preferably 3.0 or more, more preferably 4.0 or more, and still more preferably 5.0 or more. In addition, from the viewpoint of improving the COP, X in the working medium having formulation B is preferably 21.2 or less, more preferably 20.0 or less, and still more preferably 19.0 or less.

In the working medium having formulation B, Y is 2.0 or more, and from the viewpoint of improving the COP, it is preferably 3.0 or more, and more preferably 4.0 or more. In the working medium having formulation B, Y is 76.25 or less, and from the viewpoint of reducing the heat of combustion, it is preferably 75.0 or less, and more preferably 70.0 or less.

In the working medium having formulation B, Z is preferably 4.9 or more, more preferably 5.0 or more, still more preferably 6.0 or more, and particularly preferably 7.0 or more, from the viewpoint of reducing the heat of combustion. In addition, from the viewpoint of improving the CAP, Z in the working medium having formulation B is preferably 90.0 or less, more preferably 85.0 or less, and still more preferably 80.0 or less.

The relative refrigeration capacity $RCAP_{1234yf}$ of the working medium of formulation B relative to HFO-1234yf is preferably 0.98 or more, more preferably 0.99 or more, and still more preferably 1.00 or more. The relative refrigeration capacity $RCAP_{1234yf}$ is a value expressed as $CAP_g/CAP_{1234yr}$, where $CAP_{1234yf}$ is the refrigeration capacity of HFO-1234yf, and $CAP_B$ is the refrigeration capacity of the working medium of formulation B.

The above-described refrigeration capacity CAP is a value determined by the method described later using the aforementioned reference refrigeration cycle. The above-described relative refrigeration capacity $RCAP_{1234yf}$ indicates the refrigeration capacity of formulation B relative to HFO-1234yf.

The relative coefficient of performance $RCOP_{1234yf}$ of the working medium of formulation B relative to HFO-1234yf is preferably 1.06 or more, more preferably 1.07 or more, and still more preferably 1.08 or more. The relative coefficient of performance $RCOP_{1234yf}$ is a value expressed as $COP_B/COP_{12345yf}$, where $COP_{1234yf}$ is the coefficient of performance of HFO-1234yf, and $COP_B$ is the coefficient of performance of the working medium of formulation B.

Specifically, the coefficient of performance COP is a value obtained by using the aforementioned standard refrigeration cycle and a method that takes into account compressor efficiency, among the methods described later. The above-described relative coefficient of performance $RCOP_{1234yf}$ indicates the coefficient of performance of formulation B relative to HFO-1234yf.

[Composition for Heat Cycle System]

The composition for a heat cycle system in one embodiment of the disclosure includes the aforementioned working medium for a heat cycle, and may include other components, if necessary.

In the application of the aforementioned working medium for a heat cycle to the heat cycle system, for example, a mixture of the aforementioned working medium for a heat cycle and a refrigerating machine oil can be used as the composition for a heat cycle system of this embodiment. The composition for a heat cycle system of this embodiment including the aforementioned working medium for a heat cycle and a refrigerating machine oil may further include known additives such as a stabilizer, a leak detection substance, and the like.

(Refrigerating Machine Oil)

As the refrigerating machine oil, any known refrigerating machine oil conventionally used for a composition for a heat cycle system, together with a working medium consisting of a halogenated hydrocarbon, can be used without any particular limitation. Specific examples of the refrigerating machine oil include an oxygen-containing synthetic oil (such as ester-based refrigerating machine oil or ether-based refrigerating machine oil), a fluorine-based refrigerating machine oil, a mineral-based refrigerating machine oil, and a hydrocarbon-based synthetic oil.

Examples of the ester-based refrigerating machine oil include dibasic acid ester oil, polyol ester oil, complex ester oil, and polyol carbonate oil.

As the dibasic acid ester oil, an ester of a dibasic acid having from 5 to 10 carbon atoms (such as glutaric acid, adipic acid, pimelic acid, suberic acid, azelaic acid, or sebacic acid) and a monohydric alcohol having from 1 to 15 carbon atoms and a straight-chain or branched alkyl group (such as methanol, ethanol, propanol, butanol, pentanol, hexanol, heptanol, octanol, nonanol, decanol, undecanol, dodecanol, tridecanol, tetradecanol, or pentadecanol) is preferred. Specific examples of the dibasic acid ester oil include ditridecyl glutarate, di(2-ethylhexyl) adipate, diisodecyl adipate, ditridecyl adipate, and di(3-ethylhexyl) sebacate.

The polyol ester oil is preferably an ester of a diol (ethylene glycol, 1,3-propanediol, propylene glycol, 1,4-butanediol, 1,2-butanediol, 1,5-pentanediol, neopentyl glycol, 1,7-heptanediol,or 1,12-dodecanediol) or a polyol having from 3 to 20 hydroxyl groups (trimethylolethane, trimethylolpropane, trimethylolbutane, pentaerythritol, glycerin, sorbitol, sorbitan, or sorbitol glycerin condensate) and a fatty acid having from 6 to 20 carbon atoms (straight-chain or branched fatty acids such as hexanoic acid, heptanoic acid, octanoic acid, nonanoic acid, decanoic acid, undecanoic acid, dodecanoic acid, eicosanoic acid, or oleic acid, or so-called neo acid in which the alpha carbon atom is quaternary). These polyol ester oils may have a free hydroxyl group.

Esters of hindered alcohols (such as neopentyl glycol, trimethylolethane, trimethylolpropane, trimethylolbutane, and pentaerythritol) and their specific esters (including trimethylolpropane tripelargonate, pentaerythritol 2-ethylhexanoate, and pentaerythritol tetrapelargonate) are preferred as polyol ester oils.

The complex ester oil is an ester formed from a fatty acid and a dibasic acid, together with a monohydric alcohol and a polyol. The fatty acid, dibasic acid, monohydric alcohol, and polyol that can be used are the same as those described above.

The polyol carbonate oil is an ester of carbonic acid and a polyol. The polyol may be the same as the diol or polyol described above. The polyol carbonate oil may also be a ring-opening polymer of a cyclic alkylene carbonate.

Examples of the ether-based refrigerating machine oil include polyvinyl ether oil and polyoxyalkylene oil.

Examples of the polyvinyl ether oil include those obtained by polymerizing a vinyl ether monomer such as alkyl vinyl ethers, and a copolymer obtained by copolymerizing a vinyl ether monomer with a hydrocarbon monomer having an olefinic double bond.

The vinyl ether monomer may be used singly, or in combination of two or more kinds thereof.

Examples of the hydrocarbon monomer having an olefinic double bond include ethylene, propylene, various butenes, various pentenes, various hexenes, various heptenes, various octenes, diisobutylene, triisobutylene, styrene, $\alpha$-methylstyrene, and various alkylsubstituted styrenes. The hydrocarbon monomer having an olefinic double bond may be used singly, or in combination of two or more kinds thereof.

The polyvinyl ether copolymer may be either a block or random copolymer. The polyvinyl ether oil may be used singly, or in combination of two or more kinds thereof.

Examples of the polyoxyalkylene oil include polyoxyalkylene monool, polyoxyalkylene polyol, an alkyl-etherified product of polyoxyalkylene monool or polyoxyalkylene polyol, and an esterified product of polyoxyalkylene monool or polyoxyalkylene polyol.

Examples of the polyoxyalkylene monool and polyoxyalkylene polyol include those obtained by a method involving the ring-opening addition polymerization of an alkylene oxide having from 2 to 4 carbon atoms (such as ethylene oxide or propylene oxide) using an initiator such as water or a hydroxyl group-containing compound in the presence of a catalyst such as an alkali hydroxide. Furthermore, the oxyalkylene units in the polyalkylene chain may be identical within a single molecule, or a molecule may contain two or more types of oxyalkylene units. It is preferable for a single molecule to contain at least one oxypropylene unit.

Examples of the initiator used in the reaction include water, monohydric alcohols such as methanol and butanol, and polyhydric alcohols such as ethylene glycol, propylene glycol, pentaerythritol, and glycerol.

As the polyoxyalkylene oil, an alkyl-etherified product or an esterified product of polyoxyalkylene monool or polyoxyalkylene polyol is preferred. As the polyoxyalkylene polyol, polyalkylene glycol is preferred. In particular, an alkyl-etherified product of polyalkylene glycol, which is called polyglycol oil, in which the terminal hydroxyl group of polyalkylene glycol is capped with an alkyl group such as a methyl group, is preferred.

Examples of the fluorine-based refrigerating machine oil include a compound in which the hydrogen atom of a synthetic oil (such as mineral oil, poly-$\alpha$-olefin, alkylbenzene, or alkylnaphthalene described later) is substituted with a fluorine atom, a perfluoropolyether oil, and a fluorinated silicone oil.

Examples of the mineral-based refrigerating machine oil include paraffinic mineral oil obtained by refining a refrigerating machine oil fraction obtained by atmospheric or vacuum distillation of crude oil through an appropriate combination of refining processes (such as solvent deasphalting, solvent extraction, hydrocracking, solvent dewaxing, catalytic dewaxing, hydrorefining, and clay treatment), and naphthenic mineral oil.

Examples of the hydrocarbon-based synthetic oil include poly-$\alpha$-olefin, alkylbenzene, and alkylnaphthalene.

The refrigerating machine oil may be used singly, or in combination of two or more kinds thereof.

As the refrigerating machine oil, from the viewpoint of compatibility with the working medium for a heat cycle, one or more oils selected from polyol ester oil, polyvinyl ether oil, and polyglycol oil are preferred.

The content of the refrigerating machine oil in the composition for a heat cycle system may be within a range that does not significantly reduce the effectiveness of the present invention, and is preferably from 10 to 100 parts by mass, and more preferably from 20 to 50 parts by mass with respect to 100 parts by mass of the working medium for a heat cycle.

(Additives)

A stabilizer optionally contained in the composition for a heat cycle system is a component that improves the stability of the working medium for a heat cycle against heat and oxidation. As the stabilizer, known stabilizers that have been conventionally used in a heat cycle system together with a working medium consisting of a halogenated hydrocarbon, such as an oxidation resistance improver, a heat resistance improver, and a metal deactivator, can be used without any particular restrictions.

Examples of the oxidation resistance improver and the heat resistance improver include N,N'-diphenylphenylenediamine, p-Octyldiphenylamine, p,p'-dioctyldiphenylamine, N-phenyl-1-naphthylamine, N-phenyl-2-naphthylamine, N-(p-dodecyl)phenyl-2-naphthylamine, di-1-naphthylamine, di-2-naphthylamine, N-alkylphenothiazine, 6-(t-butyl)phenol, 2,6-di-(t-butyl)phenol, 4-methyl-2,6-di-(t-butyl)phenol, and 4,4'-methylenebis(2,6-di-t-butylphenol). The oxidation resistance improver and the heat resistance improver may be used singly, or in combination of two or more kinds thereof.

Examples of the metal deactivator include Imidazole, benzimidazole, 2-mercaptobenzothiazole, 2,5-dimethylcaptothiadiazole, salicylidene-propylenediamine, pyrazole, benzotriazole, tolutriazole, 2-methylbenzamidazole, 3,5-dimethylpyrazole, methylenebis-benzotriazole, organic acids or esters thereof, primary, secondary or tertiary aliphatic amines, amine salts of organic or inorganic acids, heterocyclic nitrogen-containing compounds, and amine salts of alkyl acid phosphates or derivatives thereof.

The content of the stabilizer in the composition for a heat cycle system may be within a range that does not significantly reduce the effectiveness of the present invention, and is preferably 5 parts by mass or less, and more preferably 1 part by mass or less with respect to 100 parts by mass of the working medium for a heat cycle.

Examples of a leak detection substance that may optionally be contained in the composition for a heat cycle system include an ultraviolet fluorescent dye, an odorous gas or odor masking agent, and the like.

Examples of the ultraviolet fluorescent dye include known ultraviolet fluorescent dyes conventionally used in a heat cycle system together with a working medium consisting of a halogenated hydrocarbon, such as those described in U.S. Patent No. 4249412, Japanese National-Phase Publication (JP-A) No. H10-502737, JP-A No. 2007-511645, JP-A No. 2008-500437, and JP-A No. 2008-531836.

Examples of the odor masking agent include known fragrances conventionally used in a heat cycle system together with a working medium consisting of a halogenated hydrocarbon, such as those described in JP-A No. 2008-500437 and JP-A No. 2008-531836.

In a case in which a leak detection substance is used, a solubilizing agent that improves the solubility of the leak detection substance in the working medium for a heat cycle may be used.

Examples of the solubilizing agent include those described in JP-A No. 2007-511645, JP-A No. 2008-500437, and JP-A No. 2008-531836.

The content of the leak detection substance in the composition for a heat cycle system may be within a range that does not significantly reduce the effectiveness of the invention, and is preferably 2 parts by mass or less, and more preferably 0.5 parts by mass or less with respect to 100 parts by mass of the working medium for a heat cycle.

[Heat Cycle System]

The heat cycle system in one embodiment of the disclosure is a system using the aforementioned composition for a heat cycle system. The heat cycle system of this embodiment may be a heat pump system that utilizes thermal energy obtained in a condenser or a refrigeration cycle system that utilizes cooling energy obtained in an evaporator.

Specific examples of the heat cycle system of this embodiment include chilling and freezing equipment, air conditioning equipment, an electric power generation system, a heat transport device, and a secondary cooling machine. In particular, the heat cycle system of this embodiment is preferably used as air conditioning equipment which is often installed outdoors, since it can stably and safely exhibit heat cycle performance even in higher temperature operating environments. The heat cycle system of this embodiment is also preferably used as chilling and freezing equipment.

Specific examples of air conditioning equipment include household air conditioners (such as a residential air conditioner, and a housing air conditioner), commercial air conditioners (such as a packaged air conditioner for stores, a packaged air conditioner for buildings, and a packaged air conditioner for facilities), a gas engine heat pump, a train air conditioner, and an automotive air conditioner.

The automotive air conditioner is preferably an air conditioner for a gasoline vehicle, an air conditioner for a hybrid vehicle, an air conditioner for an electric vehicle, or an air conditioner for a hydrogen vehicle, and more preferably an air conditioner for an electric vehicle.

Specific examples of chilling and freezing equipment include refrigerated displays (such as a built-in refrigerated display and a separate-type refrigerated display), commercial chilling and freezing equipment, vending machines, and ice makers.

The electric power generation system is preferably a Rankine cycle electric power generation system. A specific example of the electric power generation system is a system in which a working medium is heated in an evaporator using geothermal energy, solar heat, or medium- to high-temperature waste heat of about from 50°C to 200°C, and the working medium that has become high-temperature, high-pressure vapor is adiabatically expanded in an expander, and the work generated by this adiabatic expansion is used to drive a generator, thereby generating electricity.

The heat transport device is preferably a latent heat transport device. Examples of the latent heat transport device include a heat pipe and a two-phase closed thermosyphon device that transports latent heat by utilizing phenomena such as evaporation, boiling, and condensation of a working medium sealed inside the device. The heat pipe is used in a relatively small cooling device, such as a cooling device in a heat-generating unit of a semiconductor device or an electronic device. The two-phase closed thermosyphon device does not require a wick and has a simple structure, such that it is widely used in a gas-gas heat exchanger or for promoting snow melting and preventing freezing on roads.

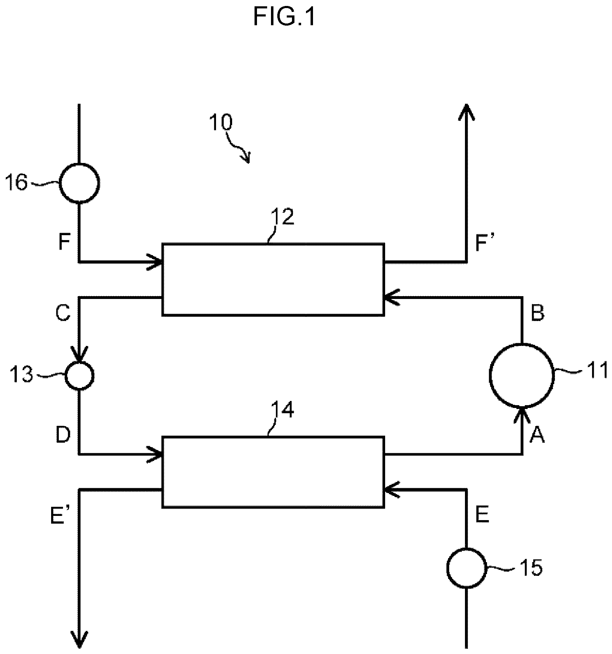

FIG. 1 is a schematic configuration diagram showing a refrigeration cycle system as an example of a heat cycle system of this embodiment of the disclosure. A method of determining the refrigeration capacity and coefficient of performance of a specified working medium for a heat cycle is described below with reference to the refrigeration cycle system shown in FIG. 1.

As shown in FIG. 1, a refrigeration cycle system 10 includes: a compressor 11 for compressing vapor A of a working medium for a heat cycle, thereby being converted into vapor B of a high-temperature and high-pressure working medium for a heat cycle; a condenser 12 for cooling the vapor B of the working medium for a heat cycle discharged from the compressor 11 to liquefy the vapor B, thereby being converted into a low-temperature and high-pressure working medium for a heat cycle C; an expansion valve 13 for expanding the working medium for a heat cycle C discharged from the condenser 12, thereby being converted into a low-temperature and low-pressure working medium for a heat cycle D; an evaporator 14 for heating the working medium for a heat cycle D discharged from the expansion valve 13, thereby being converted into vapor A of a high-temperature and low-pressure working medium for a heat cycle; a pump 15 for supplying load fluid E to the evaporator 14; and a pump 16 for supplying fluid F to the condenser 12.

In the refrigeration cycle system 10, the following cycles (i) to (iv) (refrigeration cycle) are repeated.

(i) Compressing vapor A of a working medium for a heat cycle discharged from the evaporator 14 in the compressor 11, thereby being converted into vapor B of a high-temperature and high-pressure working medium for a heat cycle. Hereinafter, this is referred to as the "AB process."

(ii) Cooling the vapor B of the working medium for a heat cycle discharged from the compressor 11 using fluid F in the condenser 12 to liquefy the vapor B, thereby being converted into a low-temperature and high-pressure working medium for a heat cycle C. At this time, the fluid F is heated to become fluid F' and then is discharged from the condenser 12. Hereinafter, this is referred to as the "BC process."

(iii) Expanding the working medium for a heat cycle C discharged from the condenser 12 with the expansion valve 13, thereby being converted into a low-temperature and low-pressure working medium for a heat cycle D. Hereinafter, this is referred to as the "CD process."

(iv) Heating the working medium for a heat cycle D discharged from the expansion valve 13 using load fluid E in the evaporator 14, thereby being converted into vapor A of a high-temperature and low-pressure working medium for a heat cycle. At this time, the load fluid E is cooled to become load fluid E' and then is discharged from the evaporator 14. Hereinafter, this is referred to as the "DA process."

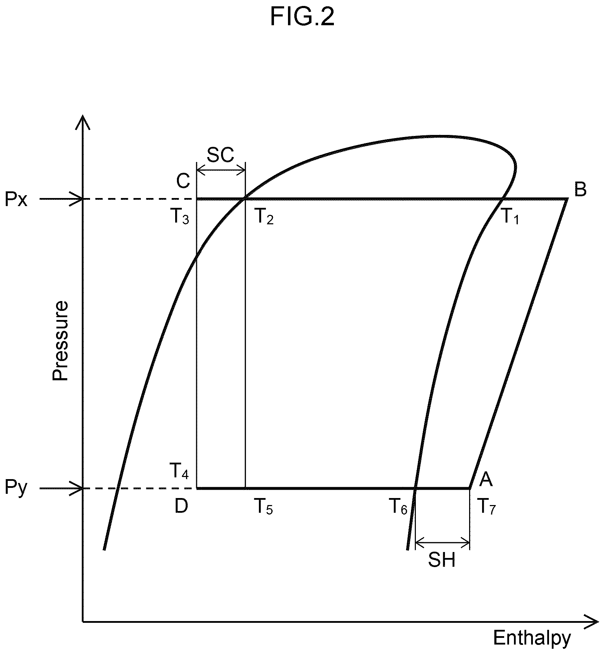

The refrigeration cycle system 10 is a cycle system consisting of an adiabaticisenthalpic change, an isenthalpic change, and an isobaric change. FIG. 2 is a cycle diagram showing the state change of the working medium for a heat cycle in the refrigeration cycle system 10 of FIG. 1 on a pressure-enthalpy diagram. When the state change of the working medium for a heat cycle is plotted on the pressure-enthalpy graph (curve) shown in FIG. 2, it can be expressed as a trapezoid with vertices A, B, C, and D.

The AB process is a process in which the compressor 11 performs adiabatic compression such that the vapor A of the high-temperature and low-pressure working medium for a heat cycle becomes the vapor B of the high-temperature and high-pressure working medium for a heat cycle. This is indicated by line AB in FIG. 2. As described later, the vapor A of the working medium for a heat cycle is introduced into the compressor 11 in a superheated state, and the resulting vapor B of the working medium for a heat cycle is also superheated vapor. The compressor suction gas density is the density ($\rho$s) at state A in FIG. 2. The compressor discharge gas pressure (discharge pressure) is the pressure (Px) in state B in FIG. 2, and is the maximum pressure in the refrigeration cycle. Since the BC process is an isobaric cooling process, the discharge pressure shows the same value as the condensation pressure (Pc). For convenience, the condensation pressure is indicated as Px in FIG. 2.

The BC process is a process in which the condenser 12 performs isobaric cooling such that the vapor B of the high-temperature and high-pressure working medium for a heat cycle becomes the low-temperature and high-pressure working medium for a heat cycle C. This is indicated by line BC in FIG. 2. The pressure at this time is the condensation pressure. Of the intersections of the pressure-enthalpy line and line BC, an intersection $T_1$ on the high enthalpy side is the condensing temperature, and an intersection $T_2$ on the low enthalpy side is the condensation boiling point temperature. Here, the temperature gradient of the condenser is given as the difference between $T_1$ and $T_2$.

The CD process is a process in which the expansion valve 13 performs isenthalpic expansion such that the low-temperature and high-pressure working medium for a heat cycle C becomes the low-temperature and low-pressure working medium for a heat cycle D. This is indicated by line CD in FIG. 2. When the temperature of the low-temperature and high-pressure working medium for a heat cycle C is denoted as $T_3$, then $T_2$-$T_3$ is the degree of supercooling (SC) of the working medium for a heat cycle in cycles (i) to (iv).

The DA process is a process in which the evaporator 14 performs isobaric heating such that the low-temperature and low-pressure working medium for a heat cycle D is returned to the vapor A of the high-temperature and low-pressure working medium for a heat cycle. This is indicated by line DA in FIG. 2. The pressure at this time is the evaporation pressure (Py). Of the intersections of the pressure-enthalpy line and line DA, the intersection $T_6$ on the high enthalpy side is the evaporating temperature. When the temperature of the vapor A of the working medium for a heat cycle is denoted by $T_7$, then $T_7$-$T_6$ is the degree of superheat (SH) of the working medium for a heat cycle in cycles (i) to (iv). $T_4$ indicates the temperature of the working medium for a heat cycle D, and $T_5$ indicates the temperature of the working medium D when the degree of supercooling (SC) is 0. Here, the temperature gradient of the evaporator is given as the difference between $T_6$ and $T_4$.

The CAP and COP of the working medium for a heat cycle can be calculated from the following formulas (5) to (8) using the enthalpies hA, hB, hC, and hD in each of states A (high-temperature and low-pressure after evaporation), B (high-temperature and high-pressure after compression), C (low-temperature and high-pressure after condensation), and D (low-temperature and low-pressure after expansion) of the working medium for a heat cycle, and the refrigerant mass circulation rate qmr. In the following Formulas (5) to (8), it is assumed that there is no pressure loss in the piping or heat exchanger.

The cycle performance (CAP and COP) of the working medium for a heat cycle is determined by carrying out theoretical calculations of the refrigeration cycle of the working medium under the above-described conditions using the Reference Fluid Thermodynamic and Transport Properties Database (REFPROP 10.0) of the National Institute of Science and Technology (NIST). For the physical property data of HFO-1123, the values described in Akasaka, R., Higashi, Y, Sakoda, N., Fukuda, S., and Lemmon, E.W., Thermodynamic properties of trifluoroethene (R1123): (p, ρ, T) behavior and fundamental equation of state, International Journal of Refrigeration., 2020, 119, 457-467 are used.

$$CAP = (hA-hD) \times \rho s \quad \text{Formula (5)}$$

$$COP = Q/P = (qmr \times (hA - hD))/(qmr \times (hB-hA)) = (hA - hD)/(hB - hA) \quad \text{Formula (6)}$$

$$Q = qmr \times (hA - hD) \quad (7)$$

$$P = qmr \times (hB - hA) \quad (8)$$

In Formulas (5) to (8) above, ρs represents the compressor suction gas density (kg/m$^3$), Q represents the output (kW), and P represents the power (kW).

In a case in which the work lost in the compressor is added to the working medium as heat, when the compressor efficiency is η, the enthalpy hB' in the state of the working medium vapor B' (high-temperature and high-pressure after compression) after the AB process is expressed by the following Formula (9) using hA, hB, and η.

$$hB' = hA + (hB - hA)/\eta \quad (9)$$

When the compressor efficiency is taken into consideration, COP and P are expressed by the following Formulas (10) and (11).

$$COP = Q/P = (hA - hD)/(hB' - hA) \quad (10)$$

$$P = qmr \times (hB' - hA) \qquad (11)$$

In Formula (10) above, Q represents the output (kW), and P represents the power (kW).

When operating a heat cycle system, it is preferable to provide means for preventing the ingress of moisture and non-condensable gases such as oxygen in order to avoid problems caused by their ingress.

Moisture in a heat cycle system can cause problems, especially when used at low temperatures. For example, problems may occur, such as freezing in a capillary tube, hydrolysis of a working medium for a heat cycle or a refrigerating machine oil, deterioration of materials due to acid components generated in the cycle, and generation of contaminants. In particular, in a case in which the refrigerating machine oil is polyglycol oil, polyol ester oil, or the like, such oil is highly hygroscopic and prone to hydrolysis. Thus, the properties of the refrigerating machine oil deteriorate, which will be a major cause of reducing the long-term reliability of the compressor. Therefore, in order to suppress hydrolysis of refrigerating machine oil, it is necessary to control the moisture concentration in the heat cycle system.

As a method of controlling the moisture concentration in the heat cycle system, a method using the moisture removal means such as a desiccant (silica gel, activated alumina, zeolite, or the like) can be mentioned. It is preferable that the desiccant is brought into contact with the liquid composition for a heat cycle system in terms of dehydration efficiency. For example, it is preferable to place a desiccant at the outlet of the condenser 12 or the inlet of the evaporator 14 so as to bring the composition for a heat cycle system into contact with the desiccant.

As the desiccant, a zeolite-based desiccant is preferred in terms of the chemical reactivity between the desiccant and the composition for a heat cycle system and the moisture absorption capacity of the desiccant.

In a case in which a refrigerating machine oil with higher moisture absorption than conventional mineral-based refrigerating machine oils is used, from the viewpoint of excellent moisture absorption ability, the zeolite-based desiccant is preferably a zeolite-based desiccant containing as a main component a compound represented by the following Formula (12).

$$M_{2/n}O \cdot Al_2O_3 \cdot xSiO_2 \cdot yH_2O \qquad \text{Formula (12)}$$

Note that M is a Group 1 element such as Na or K or a Group 2 element such as Ca, n is the atomic valence of M, and x and y are values determined by the crystal structure. By changing M, the pore size can be adjusted.

In selecting a desiccant, the pore size and the breaking strength are important. In a case in which a desiccant having a pore size larger than the molecular size of the working medium for a heat cycle contained in the composition for a heat cycle system is used, the working medium for a heat cycle is adsorbed in the desiccant. As a result, a chemical reaction occurs between the working medium for a heat cycle and the desiccant, which can result in undesirable phenomena such as the generation of non-condensable gases, a decrease in the strength of the desiccant, and a decrease in its adsorption capacity.

Therefore, it is preferable to use a zeolite-based desiccant having a small pore size as the desiccant. In particular, sodium-potassium A-type synthetic zeolite having a pore size of 3.5 angstroms or less is preferred. By applying a sodium-potassium A-type synthetic zeolite having a pore size smaller than the molecular size of the working medium for a heat cycle, it is possible to selectively adsorb and remove only the moisture in the heat cycle system without adsorbing the working medium for a heat cycle. In other words, since the working medium for a heat cycle is less likely to be adsorbed by the desiccant, thermal decomposition is less likely to occur, and as a result, degradation of the materials that constitute the heat cycle system and contaminant generation can be reduced.

The size of the zeolite-based desiccant is preferably about from 0.5 mm to 5 mm, because when it is excessively small, it can cause clogging of valves and piping in the heat cycle system, and when it is excessively large, it reduces the drying ability. The zeolite-based desiccant is preferably in the form of particles or a cylinder.

The zeolite-based desiccant can be formed into any shape by solidifying powdered zeolite with a binder (such as bentonite). As long as the zeolite-based desiccant is the main component, other desiccants (such as silica gel and activated alumina) may be used in combination. The proportion of the zeolite-based desiccant with respect to the composition for a heat cycle system is not particularly limited.

Furthermore, when a non-condensable gas enters into the heat cycle system, it causes adverse effects, including reduced heat transfer efficiency in the condenser and evaporator and an increase in operating pressure, and thus, it is necessary to minimize its ingress as much as possible. In particular, oxygen, which is one of the non-condensable gases, reacts with working medium for a heat cycle and refrigerating machine oil, promoting their decomposition.

The concentration of the non-condensable gas in the gas phase of the working medium for a heat cycle is preferably 1.5% by volume or less, and particularly preferably 0.5% by volume or less, in terms of volume ratio with respect to the working medium for a heat cycle.

The use of the working medium for a heat cycle of the disclosure of the heat cycle system in one embodiment of the disclosure makes it possible to obtain cycle performance sufficient for practical use with excellent durability while suppressing the impact on global warming.

Examples

Hereinafter, the embodiments of the disclosure will be described in detail with reference to examples, but the embodiments of the disclosure are not limited to these examples.

[Example A]

The temperature gradient ("TG (°C)" in Table 1), the relative coefficient of performance $RCOP_{R410A}$ with respect to R410A ("$RCOP_{R410A}$" in Table 1), the relative refrigeration capacity $RCAP_{R410A}$ with respect to R410A ("$RCAP_{R410A}$" in Table 1), the heat of combustion ("HOC (MJ/kg)" in Table 1), and GWP were determined using the method described above when applying the working media with the formulations listed in Table 1 to the refrigeration cycle system 10 in FIG. 1. The results are shown in Table 1.

In Table 1, "1123 (% by mass)" represents the content rate of HFO-1123 with respect to the total of HFO-1123, HFC-152a, and HFO-1234ze(E), "152a (% by mass)" represents the content rate of HFC-152a with respect to the total of HFO-1123, HFC-152a, and HFO-1234ze(E), and "1234ze(E) (% by mass)" represents the content rate of HFO-1234ze(E) with respect to the total of HFO-1123, HFC-152a, and HFO-1234ze(E). All of the working media in Examples A1 to A28 did not contain any components other than HFO-1123, HFC-152a, and HFO-1234ze(E).

[Table 1]

| Example | 1123 (% by mass) | 152a (% by mass) | 1234ze(E) (% by mass) | TG (°C) | $RCOP_{R410A}$ | $RCAP_{R410A}$ | HOC (MJ/kg) | GWP |
|---|---|---|---|---|---|---|---|---|
| A1 | 81.9 | 2.0 | 16.1 | 6.8 | 0.96 | 0.95 | 10.114 | 4 |
| A2 | 80.8 | 4.0 | 15.2 | 6.9 | 0.97 | 0.94 | 10.265 | 7 |
| A3 | 80.3 | 5.0 | 14.7 | 6.9 | 0.97 | 0.94 | 10.340 | 8 |
| A4 | 79.8 | 6.0 | 14.2 | 6.9 | 0.97 | 0.94 | 10.415 | 10 |
| A5 | 79.0 | 8.0 | 13.0 | 6.9 | 0.97 | 0.93 | 10.564 | 13 |
| A6 | 78.3 | 10.0 | 11.7 | 6.9 | 0.97 | 0.93 | 10.714 | 17 |
| A7 | 77.7 | 12.0 | 10.3 | 6.9 | 0.98 | 0.92 | 10.863 | 20 |
| A8 | 77.2 | 14.0 | 8.8 | 6.9 | 0.98 | 0.92 | 11.012 | 23 |
| A9 | 77.1 | 15.0 | 7.9 | 6.9 | 0.98 | 0.92 | 11.086 | 25 |
| A10 | 76.9 | 16.0 | 7.1 | 6.9 | 0.98 | 0.92 | 11.160 | 26 |
| A11 | 76.8 | 18.0 | 5.2 | 6.9 | 0.98 | 0.92 | 11.308 | 30 |
| A12 | 80.1 | 5.5 | 14.4 | 6.9 | 0.97 | 0.94 | 10.377 | 9 |
| A13 | 79.6 | 6.5 | 13.9 | 6.9 | 0.97 | 0.94 | 10.452 | 11 |
| A14 | 81.0 | 5.0 | 14.0 | 6.7 | 0.97 | 0.95 | 10.338 | 8 |
| A15 | 83.0 | 5.0 | 12.0 | 6.1 | 0.96 | 0.96 | 10.334 | 8 |
| A16 | 85.0 | 5.0 | 10.0 | 5.4 | 0.96 | 0.98 | 10.330 | 8 |
| A17 | 79.0 | 10.0 | 11.0 | 6.7 | 0.97 | 0.93 | 10.712 | 17 |
| A18 | 80.0 | 10.0 | 10.0 | 6.4 | 0.97 | 0.94 | 10.710 | 17 |
| A19 | 83.0 | 10.0 | 7.0 | 5.6 | 0.97 | 0.97 | 10.704 | 17 |
| A20 | 85.0 | 10.0 | 5.0 | 4.9 | 0.96 | 0.98 | 10.700 | 16 |
| A21 | 78.0 | 15.0 | 7.0 | 6.7 | 0.98 | 0.93 | 11.084 | 25 |
| A22 | 80.0 | 15.0 | 5.0 | 6.1 | 0.97 | 0.94 | 11.080 | 25 |
| A23 | 77.0 | 18.0 | 5.0 | 6.8 | 0.98 | 0.92 | 11.308 | 30 |
| A24 | 77.0 | 5.0 | 18.0 | 7.8 | 0.97 | 0.91 | 10.347 | 8 |

(continued)

| Example | 1123 (% by mass) | 152a (% by mass) | 1234ze(E) (% by mass) | TG (°C) | $RCOP_{R410A}$ | $RCAP_{R410A}$ | HOC (MJ/kg) | GWP |
|---|---|---|---|---|---|---|---|---|
| A25 | 75.0 | 5.0 | 20.0 | 8.3 | 0.98 | 0.90 | 10.351 | 8 |
| A26 | 75.0 | 10.0 | 15.0 | 7.7 | 0.98 | 0.90 | 10.721 | 17 |
| A27 | 75.0 | 15.0 | 10.0 | 7.4 | 0.98 | 0.90 | 11.090 | 25 |
| A28 | 70.0 | 30.0 | 0.0 | 9.3 | 1.00 | 0.86 | 12.210 | 49 |

In Examples above, Examples A1 to A27 are working examples, and Example A28 is a comparative example. As shown in Table 1, it can be seen that Examples A1 to A27 exhibit cycle performance comparable to that of R410A, have overwhelmingly lower GWP than R410A, and exhibit lower HOC than Example A28.

[Example B]

The temperature gradient ("TG (°C)" in Tables 2 and 3), the relative coefficient of performance $RCOP_{1234yf}$ with respect to HFO-1234yf ("$RCOP_{1234yf}$" in Tables 2 and 3), the relative refrigeration capacity $RCAP_{1234yf}$ with respect to HFO-1234yf ("$RCAP_{1234yf}$" in Tables 2 and 3), the heat of combustion ("HOC (MJ/kg)" in Tables 2 and 3), and GWP were determined using the method described above when applying the working media with the formulations listed in Tables 2 and 3 to the refrigeration cycle system 10 in FIG. 1. The results are shown in Tables 2 and 3.
In Tables 2 and 3, "1123 (% by mass)" represents the content rate of HFO-1123 with respect to the total of HFO-1123, HFC-152a, and HFO-1234ze(E), "152a (% by mass)" represents the content rate of HFC-152a with respect to the total of HFO-1123, HFC-152a, and HFO-1234ze(E), and "1234ze(E) (% by mass)" represents the content rate of HFO-1234ze(E) with respect to the total of HFO-1123, HFC-152a, and HFO-1234ze(E). All of the working media in Examples B1 to B50 did not contain any components other than HFO-1123, HFC-152a, and HFO-1234ze(E).

[Table 2]

| Example | 1123 (% by mass) | 152a (% by mass) | 1234ze(E) (% by mass) | TG (°C) | $RCOP_{1234yf}$ | $RCAP_{1234yf}$ | HOC (MJ/kg) | GWP |
|---|---|---|---|---|---|---|---|---|
| B1 | 15.1 | 2.0 | 82.9 | 6.4 | 1.02 | 1.05 | 10.254 | 4 |
| B2 | 15.8 | 5.0 | 79.2 | 6.6 | 1.02 | 1.08 | 10.475 | 9 |
| B3 | 16.9 | 10.0 | 73.1 | 6.7 | 1.02 | 1.12 | 10.842 | 17 |
| B4 | 17.9 | 15.0 | 67.1 | 6.8 | 1.02 | 1.15 | 11.210 | 26 |
| B5 | 18.7 | 20.0 | 61.3 | 6.8 | 1.02 | 1.18 | 11.578 | 34 |
| B6 | 19.4 | 25.0 | 55.6 | 6.8 | 1.02 | 1.21 | 11.946 | 42 |
| B7 | 19.8 | 30.0 | 50.2 | 6.7 | 1.02 | 1.23 | 12.315 | 50 |
| B8 | 20.3 | 35.0 | 44.7 | 6.7 | 1.02 | 1.25 | 12.683 | 58 |
| B9 | 20.7 | 45.0 | 34.3 | 6.7 | 1.02 | 1.27 | 13.346 | 74 |
| B10 | 20.5 | 55.0 | 24.5 | 6.7 | 1.03 | 1.27 | 13.943 | 91 |
| B11 | 20.2 | 60.0 | 19.8 | 6.8 | 1.03 | 1.27 | 14.242 | 99 |
| B12 | 18.4 | 75.0 | 6.6 | 6.6 | 1.03 | 1.25 | 15.139 | 123 |
| B13 | 10.0 | 10.0 | 80.0 | 4.5 | 1.02 | 1.00 | 10.856 | 17 |
| B14 | 15.0 | 15.0 | 70.0 | 6.0 | 1.02 | 1.10 | 11.216 | 26 |
| B15 | 10.0 | 15.0 | 75.0 | 4.4 | 1.02 | 1.02 | 11.226 | 26 |
| B16 | 5.0 | 15.0 | 80.0 | 2.6 | 1.03 | 0.94 | 11.237 | 26 |
| B17 | 15.0 | 20.0 | 65.0 | 5.8 | 1.02 | 1.12 | 11.585 | 34 |
| B18 | 10.0 | 20.0 | 70.0 | 4.3 | 1.02 | 1.04 | 11.596 | 34 |
| B19 | 5.0 | 20.0 | 75.0 | 2.5 | 1.03 | 0.96 | 11.606 | 34 |

(continued)

| Example | 1123 (% by mass) | 152a (% by mass) | 1234ze(E) (% by mass) | TG (°C) | $RCOP_{1234yf}$ | $RCAP_{1234yf}$ | HOC (MJ/kg) | GWP |
|---|---|---|---|---|---|---|---|---|
| B20 | 15.0 | 25.0 | 60.0 | 5.7 | 1.02 | 1.14 | 11.955 | 42 |
| B21 | 10.0 | 25.0 | 65.0 | 4.2 | 1.02 | 1.06 | 11.966 | 42 |
| B22 | 5.0 | 25.0 | 70.0 | 2.4 | 1.03 | 0.98 | 11.976 | 42 |
| B23 | 15.0 | 30.0 | 55.0 | 5.5 | 1.02 | 1.15 | 12.325 | 50 |
| B24 | 10.0 | 30.0 | 60.0 | 4.0 | 1.03 | 1.07 | 12.335 | 50 |
| B25 | 5.0 | 30.0 | 65.0 | 2.3 | 1.03 | 0.99 | 12.346 | 50 |
| B26 | 15.0 | 35.0 | 50.0 | 5.4 | 1.02 | 1.16 | 12.695 | 58 |
| B27 | 10.0 | 35.0 | 55.0 | 3.9 | 1.03 | 1.08 | 12.705 | 58 |
| B28 | 5.0 | 35.0 | 60.0 | 2.2 | 1.03 | 1.00 | 12.715 | 58 |
| B29 | 15.0 | 40.0 | 45.0 | 5.3 | 1.02 | 1.17 | 13.048 | 66 |
| B30 | 10.0 | 40.0 | 50.0 | 3.8 | 1.03 | 1.09 | 13.048 | 66 |

[Table 3]

| Example | 1123 (% by mass) | 152a (% by mass) | 1234ze(E) (% by mass) | TG (°C) | $RCOP_{1234yf}$ | $RCAP_{1234yf}$ | HOC (MJ/kg) | GWP |
|---|---|---|---|---|---|---|---|---|
| B31 | 5.0 | 40.0 | 55.0 | 2.1 | 1.03 | 1.02 | 13.048 | 66 |
| B32 | 15.0 | 45.0 | 40.0 | 5.2 | 1.03 | 1.18 | 13.346 | 74 |
| B33 | 10.0 | 45.0 | 45.0 | 3.7 | 1.03 | 1.10 | 13.347 | 74 |
| B34 | 5.0 | 45.0 | 50.0 | 2.0 | 1.03 | 1.03 | 13.347 | 74 |
| B35 | 15.0 | 50.0 | 35.0 | 5.2 | 1.03 | 1.19 | 13.645 | 82 |
| B36 | 10.0 | 50.0 | 40.0 | 3.7 | 1.03 | 1.11 | 13.645 | 83 |
| B37 | 15.0 | 60.0 | 25.0 | 5.3 | 1.03 | 1.19 | 14.243 | 99 |
| B38 | 10.0 | 60.0 | 30.0 | 3.7 | 1.03 | 1.12 | 14.243 | 99 |
| B39 | 15.0 | 70.0 | 15.0 | 5.4 | 1.03 | 1.20 | 14.840 | 115 |
| B40 | 10.0 | 70.0 | 20.0 | 3.8 | 1.03 | 1.12 | 14.840 | 115 |
| B41 | 20.7 | 40.0 | 39.3 | 6.7 | 1.02 | 1.26 | 13.047 | 66 |
| B42 | 20.7 | 50.0 | 29.3 | 6.7 | 1.02 | 1.27 | 13.645 | 82 |
| B43 | 19.2 | 70.0 | 10.8 | 6.7 | 1.03 | 1.26 | 14.840 | 115 |
| B44 | 18.3 | 76.2 | 5.5 | 6.6 | 1.03 | 1.25 | 15.210 | 125 |
| B45 | 13.8 | 76.2 | 10.0 | 5.2 | 1.03 | 1.18 | 15.211 | 125 |
| B46 | 10.8 | 76.2 | 13.0 | 4.1 | 1.03 | 1.14 | 15.211 | 125 |
| B47 | 30.0 | 10.0 | 60.0 | 9.6 | 1.01 | 1.34 | 10.815 | 17 |
| B48 | 30.0 | 30.0 | 40.0 | 8.6 | 1.01 | 1.39 | 12.293 | 50 |
| B49 | 30.0 | 50.0 | 20.0 | 8.7 | 1.02 | 1.42 | 13.644 | 82 |
| B50 | 20.0 | 80.0 | 0.0 | 7.2 | 1.03 | 1.27 | 15.437 | 131 |

In Examples above, Examples B1 to B49 are working examples, and Example B50 is a comparative example. As shown in Tables 2 and 3, Examples B1 to B49 exhibit higher cycle performance than HFO-1234yf, lower GWP than Example B50, and lower HOC than Example B50.

Industrial Applicability

A heat cycle system using the working medium for a heat cycle and the composition for a heat cycle system of the disclosure can be utilized for chilling and freezing equipment (such as built-in refrigerated displays, separate-type refrigerated displays, commercial chilling and freezing equipment, vending machines, and ice makers), air conditioning equipment (such as residential air conditioners, packaged air conditioners for stores, packaged air conditioners for buildings, packaged air conditioners for facilities, gas engine heat pumps, train air conditioners, and automotive air conditioners), electric power generation systems (for waste heat recovery electric power generation and the like), heat transport devices (such as heat pipes), and secondary cooling machines.

The disclosure of JP-A No. 2022-172709, filed on October 27, 2022, is incorporated herein by reference in its entirety. All publications, patent applications, and standards mentioned herein are incorporated herein by reference to the same extent as if each individual publication, patent application, or standard was specifically and individually indicated to be incorporated by reference.

Reference Signs List

10      Refrigeration cycle system
11      Compressor
12      Condenser
13      Expansion valve
14      Evaporator
15, 16  Pump

**Claims**

1.  A working medium for a heat cycle, comprising trifluoroethylene, 1,1-difluoroethane, and (E)-1,3,3,3-tetrafluoropropene.

2.  The working medium for a heat cycle according to claim 1, which satisfies the following Formulas (1) and (2) when a content rate of 1,1-difluoroethane with respect to a total content rate of trifluoroethylene, 1,1-difluoroethane, and (E)-1,3,3,3-tetrafluoropropene is Y% by mass, and a content rate of (E)-1,3,3,3-tetrafluoropropene with respect to the same is Z% by mass:

$$\text{Formula (1): } 2.0 \leq Y \leq 18.34; \text{ and}$$

$$\text{Formula (2): } Z \leq -0.01611 \times Y^2 - 0.36606 \times Y + 17.14.$$

3.  The working medium for a heat cycle according to claim 2, wherein the working medium for a heat cycle has a heat of combustion of 12.000 MJ/kg or less.

4.  The working medium for a heat cycle according to claim 2, wherein the working medium for a heat cycle has a global warming potential of 45 or less.

5.  The working medium for a heat cycle according to claim 1, which satisfies the following Formulas (3) and (4) when a content rate of 1,1-difluoroethane with respect to a total content rate of trifluoroethylene, 1,1-difluoroethane, and (E)-1,3,3,3-tetrafluoropropene is Y% by mass, and a content rate of (E)-1,3,3,3-tetrafluoropropene with respect to the same is Z% by mass:

$$\text{Formula (3): } 2.0 \leq Y \leq 76.25; \text{ and}$$

$$\text{Formula (4): } Z \geq 0.00279 \times Y^2 - 1.25979 \times Y + 84.84.$$

6.  The working medium for a heat cycle according to claim 5, wherein the working medium for a heat cycle has a heat of combustion of 15.300 MJ/kg or less.

7. The working medium for a heat cycle according to claim 5, wherein the working medium for a heat cycle has a global warming potential of 130 or less.

8. A composition for a heat cycle system, comprising the working medium for a heat cycle according to claim 1.

FIG.1

# FIG.2

## INTERNATIONAL SEARCH REPORT

| International application No. |
| --- |
| **PCT/JP2023/038219** |

| A. | CLASSIFICATION OF SUBJECT MATTER |
| --- | --- |

*C09K 5/04*(2006.01)i
FI:   C09K5/04 F

According to International Patent Classification (IPC) or to both national classification and IPC

| B. | FIELDS SEARCHED |
| --- | --- |

Minimum documentation searched (classification system followed by classification symbols)

C09K5/04

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

CAplus/REGISTRY (STN)

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| X | WO 2018/047816 A1 (ASAHI GLASS CO., LTD.) 15 March 2018 (2018-03-15) claims, paragraphs [0035]-[0038], [0175]-[0182], examples 100, 101 | 1-8 |
| X | WO 2015/115252 A1 (ASAHI GLASS CO., LTD.) 06 August 2015 (2015-08-06) claims, paragraphs [0071], [0146]-[0168], table 7, examples 15-22 | 1-8 |
| X | WO 2015/125534 A1 (ASAHI GLASS CO., LTD.) 27 August 2015 (2015-08-27) claims, paragraphs [0065], [0135]-[0143], table 8, examples 59-94 | 1-8 |
| X | WO 2015/125878 A1 (ASAHI GLASS CO., LTD.) 27 August 2015 (2015-08-27) claims, paragraphs [0032], [0190]-[0236], table 3, working mediums 64-87 | 1-8 |
| X | WO 2015/125880 A1 (ASAHI GLASS CO., LTD.) 27 August 2015 (2015-08-27) claims, paragraphs [0032], [0176]-[0229], table 3, working mediums 65-88 | 1-8 |

☐ Further documents are listed in the continuation of Box C.     ☑ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| **08 December 2023** | **26 December 2023** |

| Name and mailing address of the ISA/JP | Authorized officer |
| --- | --- |
| **Japan Patent Office (ISA/JP)** **3-4-3 Kasumigaseki, Chiyoda-ku, Tokyo 100-8915** **Japan** | |
| | Telephone No. |

Form PCT/ISA/210 (second sheet) (January 2015)

**INTERNATIONAL SEARCH REPORT**
Information on patent family members

International application No.

**PCT/JP2023/038219**

| Patent document cited in search report | Publication date (day/month/year) | Patent family member(s) | Publication date (day/month/year) |
|---|---|---|---|
| WO 2018/047816 A1 | 15 March 2018 | US 2019/0257553 A1<br>claims, paragraphs [0048]-[0051], [0187]-[0189], examples 100, 101<br>EP 3511392 A1<br>CN 109689831 A | |
| WO 2015/115252 A1 | 06 August 2015 | US 2016/0333243 A1<br>claims, paragraphs [0085], [0171]-[0178], table 7, examples 15-22<br>EP 3101082 A1<br>CN 106029821 A | |
| WO 2015/125534 A1 | 27 August 2015 | US 2016/0347981 A1<br>claims, paragraphs [0082], [0173]-[0177], table 8, examples 59-94<br>EP 3109291 A1<br>CN 106029824 A | |
| WO 2015/125878 A1 | 27 August 2015 | US 2016/0355716 A1<br>claims, paragraphs [0033], [0252]-[0269], table 3, working mediums 64-87<br>EP 3112437 A1<br>CN 106029825 A | |
| WO 2015/125880 A1 | 27 August 2015 | US 2016/0347982 A1<br>claims, paragraphs [0033], [0236]-[0265], table 3, working mediums 65-88<br>EP 3109298 A1<br>CN 106029850 A | |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2015125880 A
- US 4249412 A
- JP H10502737 A
- JP 2007511645 A
- JP 2008500437 A
- JP 2008531836 A
- JP 2022172709 A

**Non-patent literature cited in the description**

- **AKASAKA, R ; HIGASHI, Y ; SAKODA, N. ; FUKUDA, S. ; LEMMON, E.W.** Thermodynamic properties of trifluoroethene (R1123). *behavior and fundamental equation of state, International Journal of Refrigeration*, 2020, vol. 119, 457-467